# DEMANDE DE BREVET EUROPEEN

(11) **EP 4 799 488 A1**
(43) Date de publication de la demande: **02.09.2026**
(21) Numéro de dépôt: 25305274.0
(22) Date de dépôt: 28.02.2025
(51) Int. Cl.: A23J 1/14, A23J 3/14, A23J 3/22, A23L 11/00

(54) **COMPOSITION ALIMENTAIRE À BASE DE PROTÉINES VÉGÉTALES TEXTURÉES, PROCÉDÉ DE FABRICATION ET UTILISATIONS**

(71) Demandeur: Limagrain Ingredients, 63720 Saint-Ignat (FR)
(72) Inventeur: BAERT, Domitille, 62510 ARQUES (FR); DESPRE, Denis, 63200 RIOM (FR); JAREMKO, François, 63200 RIOM (FR); LEYRIT, Jordan, 63200 RIOM (FR)
(74) Mandataire: Cabinet Becker et Associés

(57) **Abrégé**

La présente invention a trait à une nouvelle composition alimentaire à base de protéines végétales texturées, son procédé de fabrication et les utilisations d'une telle composition alimentaire. L'invention vise à proposer des protéines végétales qui reproduisent la texture, la jutosité et les qualités organoleptiques de la viande et du poisson, tout en éliminant l'arrière-goût typique souvent associé aux succédanés de viande et de poisson traditionnels. L'invention vise également à fournir de telles protéines végétales dont les apports en acides aminés, en terme qualitatif et quantitatif, se rapprochent des apports des produits carnés ou produits de la mer.

## Description

### Domaine de l'invention

La présente invention concerne le domaine des produits alimentaires à base de protéines végétales, et plus particulièrement des protéines végétales texturées (PVT) sèches. L'invention vise à proposer des protéines végétales qui reproduisent la texture, la jutosité et les qualités organoleptiques de protéines animales telles que la viande et le poisson, tout en éliminant l'arrière-goût typique souvent associé aux succédanés de viande et de poisson traditionnels. L'invention vise également à fournir de telles protéines végétales dont les apports en acides aminés, en terme qualitatif et quantitatif, se rapprochent des apports des produits carnés et produits de la mer.

### Etat de la technique

Les consommateurs sont de plus en plus sensibles à l'impact de leur consommation alimentaire sur l'environnement et les animaux. Dans ce contexte, ils sont toujours plus nombreux à se tourner vers des alternatives aux produits carnés et aux produits de la mer. En réponse à cette évolution, les substituts de viande et de poisson à base de protéines végétales ont connu un essor significatif ces dernières années, confirmant l'engouement des consommateurs pour des options alimentaires plus durables, éthiques et saines.

L'industrie agroalimentaire a répondu à cette demande par des développements technologiques qui permettent l'utilisation d'une large gamme d'ingrédients alternatifs pour la fabrication de produits de substitution de protéines animales telles que la viande, le poisson, le lait, les œufs... Notamment, les protéines végétales texturées sont largement employées pour imiter les produits carnés et produits de la mer. Ces protéines végétales texturées sont principalement obtenues à partir de sources de protéines végétales telles que le soja ou le pois. Les procédés classiques de texturation, tels que l'extrusion, permettent de générer une structure fibrillaire qui rappelle la texture de la viande et du poisson. Les protéines végétales texturées peuvent notamment se présenter sous la forme de fibres, de flocons, de morceaux, de granulés, de tranches ou d'autres formes. Lorsqu'elles sont hydratées et cuisinées, elles conservent leur intégrité structurelle et leur « mâche » caractéristique. Les produits carnés généralement imités par les protéines végétales texturées comprennent les produits fabriqués à partir de viande émulsifiée, tels que les hot-dogs, les produits fabriqués à partir de viande hachée, tels que les saucisses ou les galettes de bœuf haché, les produits carnés restructurés fabriqués à partir de viande à muscles entiers, tels que le jambon désossé, et les produits à base de viande à muscles entiers, tels que les sautés.

Malgré la demande et les attentes toujours croissantes des consommateurs, les protéines végétales texturées disponibles actuellement ne donnent pas entièrement satisfaction. En effet, bien que les procédés d'extrusion permettent de créer une structure fibrillaire imitant celle de la viande et du poisson, les produits obtenus manquent souvent de fermeté, de jutosité et/ou d'élasticité, caractéristiques essentielles des produits animaux. Ainsi, les substituts actuels présentent souvent une texture homogène, qui ne reproduit pas fidèlement les variations présentes dans les morceaux de viande ou de poisson. Par ailleurs, les protéines utilisées, notamment celles issues du soja, possèdent des composés intrinsèques (tels que les isoflavones) responsables d'un arrière-goût prononcé (« goût vert »), souvent perçu comme désagréable par les consommateurs. De plus, la plupart des produits reposent principalement sur une seule source de protéines (soja ou pois), ce qui limite la diversité fonctionnelle et nutritionnelle des produits.

Il existe donc un besoin en protéines végétales texturées présentant une texture et une jutosité améliorées, permettant de remplacer en tout ou partie les protéines animales afin de fournir des produits adaptés à une large gamme de formulations alimentaires.

### Résumé de l'invention

En travaillant sur le développement de nouvelles protéines végétales texturées, les inventeurs ont mis au point des compositions présentant une grande variété de textures, permettant de remplacer partiellement ou en totalité la viande ou le poisson, tout en offrant les avantages nutritionnels généralement associés aux produits carnés et au poisson. Plus particulièrement, les inventeurs ont découvert qu'il est possible de jouer sur la texture et la jutosité des protéines végétales ainsi que sur leur qualité nutritionnelle, en associant des protéines de légumineuses à des protéines de céréales et/ou d'oléagineux, et en ajustant leurs proportions. Notamment, les inventeurs ont mis au point des compositions réalisées à partir d'un concentrat de protéines de légumineuses et d'un concentrat ou d'un isolat de protéines de céréales ou d'oléagineux, qui présentent une texture et une jutosité particulièrement agréables en bouche, tout en garantissant un apport en acides aminés essentiels. Les compositions selon l'invention sont avantageusement neutres en goût, de sorte qu'il n'est pas nécessaire d'utiliser de produit masquant pour en modifier le goût.

L'invention a donc pour objet une composition alimentaire à base de protéines végétales texturées, dans laquelle ladite composition alimentaire comprend entre 50 et 85% en poids de protéines végétales et entre 10 et 25% en poids de fibres végétales, lesdites protéines végétales comprenant d'une part des protéines d'au moins une légumineuse et d'autre part des protéines d'au moins une céréale et/ou d'au moins un oléagineux.

Avantageusement, ladite composition alimentaire comprend au plus 12% en poids d'humidité.

Selon l'invention, la composition alimentaire peut être obtenue à partir d'un mélange de matières premières comprenant un concentrat protéique de légumineuse et au moins une source protéique additionnelle choisie parmi les protéines de céréales et les protéines d'oléagineux.

Au moins une source protéique additionnelle du mélange de matières premières est alors avantageusement un concentrat protéique de céréales ou un concentrat protéique d'oléagineux. De manière alternative ou cumulative, au moins une source protéique additionnelle du mélange de matières premières est avantageusement un isolat protéique de céréales ou un isolat protéique d'oléagineux, notamment un isolat de blé (gluten).

Dans un mode de réalisation, le mélange de matières premières comprend en outre un isolat protéique de légumineuse et/ou des fibres végétales ajoutées, notamment des fibres de pois.

Le mélange de matières premières peut comprendre entre 20% et 60% en poids de concentrat protéique de légumineuse et entre 15% et 55% en poids de source protéique additionnelle, et optionnellement entre 20% et 25% en poids d'isolat protéique de légumineuse, et/ou entre 1% et 5% en poids de fibres ajoutées, notamment des fibres de pois, préférentiellement entre 1,5% et 2,5% en poids de fibres ajoutées.

Avantageusement, les protéines de légumineuses sont choisies parmi les protéines de fèves ou fèveroles, les protéines de pois, les protéines de pois chiche, les protéines de haricot, les protéines de lentille, les protéines de lupin et n'importe quel mélange de celles-ci.

De même, les protéines de céréales sont avantageusement choisies parmi les protéines de blé, les protéines d'avoine, les protéines de maïs, les protéines de riz, les protéines d'orge, les protéines de seigle, les protéines de sarrazin, les protéines de millet, les protéines de quinoa, les protéines de triticale, et n'importe quel mélange de celles-ci.

Les protéines d'oléagineux sont avantageusement choisies parmi les protéines de tournesol, les protéines de colza, les protéines d'olive, les protéines d'arachide, les protéines de canola, les protéines de chanvre, les protéines de citrouille et n'importe quel mélange de celles-ci.

Selon l'invention, la composition alimentaire peut notamment être sous forme de flocons (« flakes »), morceaux calibrés (« chunks »), granules, billettes ou lamelles.

Dans un mode de réalisation, la composition alimentaire est sous forme de flocons de longueur comprise entre 5 mm et 15 mm, lesdits flocons ayant une masse volumique comprise entre 120 g/L et 200 g/L, et/ou une capacité de rétention d'eau comprise entre 2,5 et 4 g/g.

Dans un autre mode de réalisation, la composition alimentaire est sous forme de morceaux calibrés de longueur comprise entre 10 mm et 40 mm et de largeur comprise entre 5 mm et 30 mm, lesdits morceaux ayant une masse volumique comprise entre 70 g/L et 280 g/L, et/ou une capacité de rétention d'eau comprise entre 1,5 et 3,5 g/g.

Dans un autre mode de réalisation, la composition alimentaire est sous forme de granules de longueur comprise entre 10 mm et 30 mm et de diamètre compris entre 1 mm et 5 mm, lesdits granules ayant une masse volumique comprise entre 100 g/L et 160 g/L et/ou une capacité de rétention d'eau comprise entre 1,5 et 3,5 g/g.

L'invention a également pour objet un mélange de matières premières sèches destiné à être extrudé pour la fabrication d'une composition alimentaire à base de protéines végétales texturées, comprenant entre 50% et 75% en poids de concentrat de protéines végétales, choisis parmi les concentrats protéiques de légumineuses et les concentrats protéiques de céréales ou d'oléagineux, entre 0 et 50% en poids d'isolat de protéines végétales, choisis parmi les isolats protéiques de légumineuse et isolat de blé (gluten), et entre 0 et 5% en poids de fibres végétales ajoutées, ledit mélange étant avantageusement un mélange de poudres.

Selon l'invention, le concentrat de protéines végétales peut notamment être choisi parmi un concentrat de pois, un concentrat de pois chiche, un concentrat de haricot, un concentrat de fève ou féverole, un concentrat de lupin, un concentrat de lentille, un concentrat de blé, un concentrat d'avoine, un concentrat de maïs, un concentrat de riz, un concentrat d'orge, un concentrat de seigle, un concentrat de sarrazin, un concentré de millet, un concentrat de quinoa, un concentrat de triticale, un concentrat de tournesol, un concentrat de colza, un concentrat d'olive, un concentrat d'arachide, un concentrat de canola, un concentrat de citrouille et n'importe quel mélange de ceux-ci.

De même, l'isolat de protéines végétales peut notamment être choisi parmi un isolat de pois, un isolat de pois chiche, un isolat de haricot, un isolat de fève ou féverole, un isolat de lentille, un isolat de lupin, un isolat de blé (gluten), un isolat d'avoine, un isolat de maïs, un isolat de riz, un isolat d'orge, un isolat de seigle, un isolat de sarrazin, un isolat de millet, un isolat de quinoa, un isolat de triticale, un isolat de tournesol, un isolat de colza, un isolat d'olive, un isolat d'arachide, un isolat de canola, un isolat de citrouille et n'importe quel mélange de ceux-ci.

L'invention a également pour objet un procédé de fabrication d'une composition alimentaire à base de protéines végétales texturées selon l'invention, comprenant les étapes selon lesquelles
a) On introduit dans une extrudeuse un mélange de matières premières sèches selon l'une des revendications 12 ou 13 et de l'eau ;
b) On extrude ledit mélange à une température comprise entre 30°C et 170°C ;
c) On sèche la composition en sortie d'extrudeuse.

Dans un mode de réalisation, le mélange de matières premières sèches et l'eau sont introduits séparément dans l'extrudeuse, le mélange de matières premières sèches étant introduit en amont de l'eau.

L'invention a également pour objet toute utilisation d'une composition alimentaire à base de protéines végétales texturées selon l'invention, en remplacement total ou partiel d'une source de protéines animales, telle que de la viande ou du poisson, pour la réalisation d'un produit alimentaire, ladite composition étant préalablement réhydratée.

La présente invention vise également tout produit alimentaire comprenant une composition alimentaire à base de protéines végétales texturées selon l'invention.

### Brève description des figures

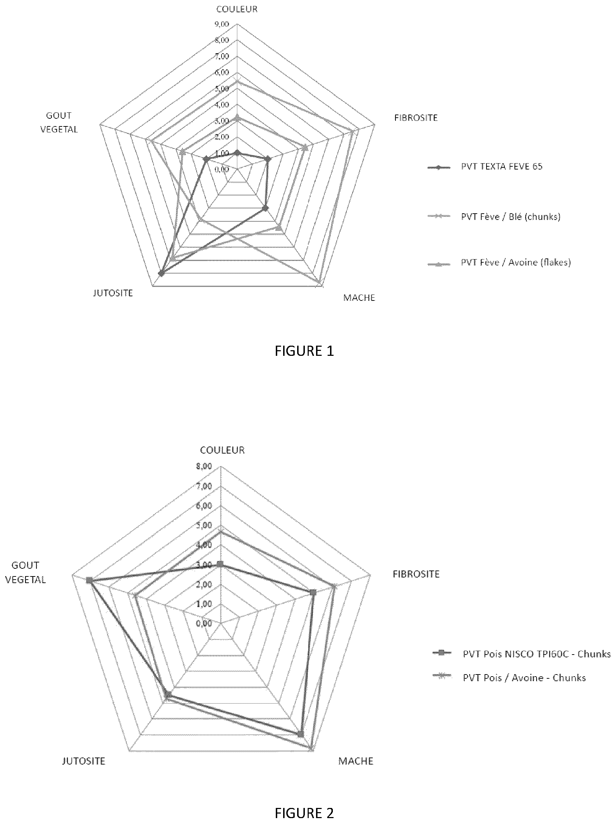

Figure 1 : Graphique en radar comparant les propriétés organoleptiques de deux compositions alimentaires selon l'invention, respectivement à base de protéines de fèves et avoine (PVT Fève / Avoine (flakes)), et à base de protéine de fèves et gluten (PVT Fève / Blé (chunks)), et de protéines texturées de fèves de l'état de la technique (PVT TEXTA FEVE 65). Les propriétés évaluées sont la couleur, la mâche, la fibrosité, la sensation d'humidité et le goût végétal ;
Figure 2 : Graphique en radar comparant les propriétés organoleptiques d'une composition alimentaire selon l'invention, à base de protéines de pois et avoine (PVT Pois / Avoine - Chunks), et de protéines texturées de pois de l'état de la technique (PVT Pois NISCO TPI60C - Chunks). Les propriétés évaluées sont la couleur, la mâche, la fibrosité, la sensation d'humidité et le goût végétal ;

### Description détaillée de l'invention

### Définitions

Dans le contexte de l'invention, les termes *« protéines végétales texturées »* ou « *protéines texturées* » désignent un ingrédient alimentaire obtenu par transformation de protéines végétales comestibles, notamment extraites de sources telles que le pois, le blé ou d'autres légumineuses, oléagineux et céréales. Ces protéines sont traitées par des procédés spécifiques, tels que l'extrusion ou autres méthodes de texturation, pour leur conférer une structure fibreuse ou lamellaire, imitant ainsi la texture et la consistance des fibres musculaires de la viande et du poisson. La texturation est un procédé mécanique et thermique au cours duquel la structure globulaire des protéines végétales est détruite, les protéines étant ensuite réalignées sous forme de fibres, afin d'obtenir des produits qui imitent la texture de la viande ou du poisson. Ces protéines peuvent avoir des fibres longues ou courtes, et présenter différentes caractéristiques selon la source, la teneur en protéines, la forme finale, etc. Les protéines végétales texturées peuvent être utilisées comme substituts de viande ou de poisson dans divers produits alimentaires. La présente invention vise plus particulièrement les protéines végétales texturées sèches, par opposition aux protéines végétales texturées humides.

Dans le contexte de l'invention, on désigne par *« concentrat de protéines »* ou « *concentrat protéique* » une forme de protéine végétale obtenue par extraction et purification des protéines à partir de matières premières végétales, telles que le pois ou le tournesol. Le processus vise à éliminer une partie des composants non protéiques, comme les glucides (amidon) et les lipides, tout en conservant une teneur élevée en protéines. Les concentrats protéiques contiennent généralement entre 55 % et 80 % de protéines en poids sec, le reste étant composé principalement de fibres, de glucides et de minéraux. Les concentrats protéiques se présentent habituellement sous forme de poudre.

Dans le contexte de l'invention, on désigne par *« isolat de protéines »* ou « *isolat protéique »* une forme purifiée de protéine végétale, obtenue par un processus de traitement avancé qui élimine presque complètement les composés non protéiques, tels que les fibres, les glucides et les lipides. Les isolats protéiques contiennent typiquement au moins 80 % de protéines en poids sec, et notamment entre 80% et 90%, ce qui en fait une source de protéines de très haute concentration et pureté. Les isolats protéiques se présentent habituellement sous forme de poudre.

Dans le contexte de l'invention, l'expression « *compris entre x et y* » signifie que les valeurs x et y sont incluses. Par ailleurs, les gammes décrites doivent s'entendre comme incluant n'importe quelle sous-gamme et toutes les valeurs entre les valeurs seuils.

Dans le contexte de l'invention, le terme « *environ* » signifie la valeur considérée plus ou moins 10%.

### Composition alimentaire

La présente invention a trait à une composition alimentaire à base de protéines texturées, dans laquelle ladite composition alimentaire comprend entre 50 et 85% en poids de protéines végétales et entre 10 et 25% en poids de fibres, lesdites protéines végétales comprenant d'une part des protéines d'au moins une légumineuse et d'autre part des protéines d'au moins une céréale et/ou d'au moins un oléagineux.

Les pourcentages en lien avec la composition alimentaire s'entendent en poids, sur la base du poids total de ladite composition.

Selon l'invention, la composition alimentaire comprend, consiste ou consiste essentiellement en des protéines texturées. Avantageusement, la composition alimentaire selon l'invention ne comprend que des composés d'origine végétale, en ce sens qu'elle est exempt de composés d'origine animale. La composition selon l'invention peut éventuellement comprendre des agents de saveur, des colorants et/ou des vitamines.

L'invention concerne plus particulièrement des compositions alimentaires à base de protéines texturées sèches, qui nécessitent une réhydratation avant utilisation, par opposition aux protéines végétales texturées humides qui peuvent être utilisées directement. Ainsi, la composition alimentaire selon l'invention comprend avantageusement au plus 14% en poids d'humidité, préférentiellement au plus 12% en poids d'humidité. Dans un mode de réalisation, la composition alimentaire comprend entre 2% et 14% d'humidité, préférentiellement entre 5% et 12% en poids d'humidité, notamment entre 2% et 5%, entre 5% et 10%, entre 6% et 8%, entre 8% et 10%, entre 10% et 12%, entre 8% et 14%, entre 10% et 14%, entre 12% et 14%.

L'association selon l'invention d'au moins une source protéique de légumineuse et au moins une source protéique de céréale ou oléagineux permet d'apporter l'ensemble des acides aminés essentiels, qui doivent obligatoirement être procurés par l'alimentation. Notamment, la composition alimentaire selon l'invention permet un apport en leucine, isoleucine, valine, thréonine, méthionine, phénylalanine, tryptophane et lysine. Avantageusement, la composition alimentaire permet en outre un apport en histidine. Dans un mode de réalisation, la composition alimentaire permet en outre l'apport de tout ou partie des onze autres acides aminés, dits « non essentiels ». Dans un mode de réalisation préféré, la composition alimentaire permet un apport en l'ensemble des vingt acides aminés.

Avantageusement, les protéines de légumineuses sont choisies parmi les protéines de fèves ou féveroles, les protéines de pois, les protéines de pois chiche, les protéines de haricot, les protéines de lentille, les protéines de lupin et n'importe quel mélange de celles-ci. Préférentiellement, les protéines de soja sont exclues des protéines de légumineuses selon l'invention.

Les protéines de céréales sont avantageusement choisies parmi les protéines de blé, les protéines d'avoine, les protéines de maïs, les protéines de riz, les protéines d'orge, les protéines de seigle, les protéines de sarrazin, les protéines de millet, les protéines de quinoa, les protéines de triticale, et n'importe quel mélange de celles-ci.

Les protéines d'oléagineux sont avantageusement choisies parmi les protéines de tournesol, les protéines de colza, les protéines d'olive, les protéines de canola, les protéines d'arachide, les protéines de chanvre, les protéines de citrouille et n'importe quel mélange de celles-ci. Préférentiellement, les protéines de soja sont exclues des protéines d'oléagineux selon l'invention.

Selon l'invention, la composition comprend au moins 50% en poids de protéines végétales, notamment au moins 55%, au moins 60%, au moins 65%, au moins 70%, au moins 80% de protéines végétales. Dans un mode de réalisation, la composition alimentaire comprend entre 55% et 80% en poids, +/- 5%, de protéines végétales, entre 60% et 75% en poids, +/- 5%, entre 65% et 70% en poids, +/- 5%, entre 50% et 55% en poids, +/- 5%, entre 55% et 60% en poids, +/- 5%, entre 60% et 65% en poids, +/- 5%, entre 70% et 75% en poids, +/- 5%.

Dans un mode de réalisation la composition alimentaire comprend entre 9% et 20% en poids de glucides, par exemple, environ 9%, 10%, 11%, 12%, 13%, 14%, 15%, 16%, 17%, 18%, 19% ou 20%. Dans un mode de réalisation, la composition comprend entre 9% et 12% en poids de glucides, entre 10% et 15%, entre 12% et 17%, entre 14% et 18%, entre 17% et 20%.

De manière alternative ou cumulative, la composition alimentaire peut comprendre entre 2% et 7% en poids de lipides, par exemple environ 2%, 2,5%, 3%, 3,5%, 4%, 4,5%, 5%, 5,5%, 6%, 6,5% ou 7%. Dans un mode de réalisation, la composition comprend entre 2% et 3% en poids de lipides, entre 2,5% et 3,5%, entre 3% et 4%, entre 3,5% et 4,5%, entre 5% et 6%, entre 5,5% et 6,5%, entre 6% et 7%.

De manière alternative ou cumulative, la composition alimentaire peut comprendre entre 9% et 20% en poids de fibres, par exemple, environ 9%, 10%, 11%, 12%, 13%, 14%, 15%, 16%, 17%, 18%, 19% ou 20%. Dans un mode de réalisation, la composition comprend entre 9% et 12% en poids de fibres, entre 10% et 15%, entre 13% et 17%, entre 15% et 18%, entre 17% et 20%.

Dans un mode de réalisation, la composition alimentaire selon l'invention est une composition à base de protéines de fèves, de pois et d'avoine, et comprend environ 60% à 65% de protéines végétales, environ 11% à 13% de glucides, environ 5% à 6% de lipides, environ 10% à 12% de fibres.

Dans un mode de réalisation, la composition alimentaire selon l'invention est une composition à base de protéines de fèves et de blé, et comprend environ 70% à 75% en poids de protéines végétales, environ 9% à 10% de glucides, environ 3,5% à 4,5 % de lipides, environ 10% à 12% de fibres.

Dans un mode de réalisation, la composition alimentaire selon l'invention est une composition à base de protéines de pois et d'avoine, et comprend environ 50% à 65% de protéines végétales, environ 12% à 15% de glucides, environ 5% à 6% de lipides, environ 12% à 15% de fibres.

Dans un mode de réalisation, la composition alimentaire selon l'invention est une composition à base de protéines de pois, de lentilles, et de tournesol, et comprend environ 55% à 60% de protéines végétales, environ 8, 5% à 9,5 % de glucides, environ 5,5% à 6,5% de lipides, environ 15% à 19% de fibres.

Selon l'invention, la composition alimentaire peut être mise en forme selon les besoins des consommateurs, notamment, en fonction de l'utilisation à laquelle est destinée ladite composition. Notamment, le choix de la forme peut dépendre de la texture attendue. En effet, la densité apparente et/ou la capacité de rétention d'eau de la composition peuvent varier en fonction de la forme choisie. Ainsi, la composition selon l'invention peut notamment être sous forme de flocons (flakes), morceaux calibrés (chunks), granules, billettes, lamelles, etc.

Dans un mode de réalisation ladite composition alimentaire est sous forme de flocons. Les flocons ont par exemple une longueur comprise entre environ 5 mm et environ 15 mm.

Dans le contexte de l'invention, la longueur désigne la plus grande dimension du produit considéré. La largeur désigne la dimension s'étendant dans le même plan, perpendiculairement à la longueur.

Avantageusement, lesdits flocons ont une densité apparente comprise entre 120 g/L et 200 g/L, notamment une densité apparente d'environ 120 g/L, 130 g/L, 140 g/L, 145g/L, 150 g/L, 155 g/L, 160 g/L, 165 g/L, 170 g/L, 175 g/L, 180 g/L, 185 g/L, 190 g/L, 195 g/L, 200 g/L. Par exemple, la densité apparente est comprise entre 120 g/L et 160 g/L, entre 130 g/L et 170 g/L, entre 140 g/L et 180 g/L, entre 150 g/L et 190 g/L, entre 160 g/L et 200 g/L.

Dans le contexte de l'invention, les termes « masse volumique », « densité » et « densité apparente » sont utilisés de manière interchangeable pour désigner la masse volumique apparente avec tassement de la composition alimentaire à l'état sec, avant toute réhydratation, mesurée à température ambiante. La masse volumique est la masse volumique moyenne pour 100g de produit sec. La densité apparente peut être mesurée par toute méthode connue de l'homme du métier. Préférentiellement, la densité apparente est mesurée selon le test A suivant.

### Test A :

1-Tarer une éprouvette graduée de X litre(s),
2-Remplir l'éprouvette avec la composition alimentaire à analyser. Préférentiellement, s'assurer que la composition alimentaire remplisse le volume des X litres à l'aide de petits chocs manuels sur la paroi de l'éprouvette,
3-Peser l'éprouvette remplie avec la composition alimentaire. Un poids P en grammes est obtenu,
4-Calculer la densité apparente : densité apparente = (P/X).

Avantageusement, lesdits flocons ont une capacité de rétention d'eau comprise entre 2,5 g/g et 4 g/g. par exemple, la capacité de rétention d'eau est d'environ 2,5 g/g, 3 g/g, 3,5 g/g, 4 g/g.

Dans le contexte de l'invention, la capacité de rétention d'eau (ou WHC pour « Water Holding Capacity »)) s'entend en grammes d'eau par grammes de composition. La capacité de rétention d'eau correspond donc à la quantité d'eau que la composition alimentaire peut absorber par unité de poids. Selon l'invention, il est possible de jouer sur la capacité de rétention d'eau de la composition alimentaire, de manière à améliorer la jutosité de ladite composition. En effet, plus la capacité de rétention d'eau est élevée, plus la composition peut absorber d'eau. La capacité de rétention d'eau peut être mesurée par toute méthode connue de l'homme du métier.

Préférentiellement, la capacité de rétention d'eau est mesurée selon le test B ci-dessous.

### Test B :

1: Peser 25g de produit sec (W1)
2: Mettre ces 25g de produit sec dans 400 ml d'eau à 10°C
3: Attendre 40 minutes en remuant toutes les 10 minutes
4: Egoutter le produit humide et le laisser sur du papier absorbant pendant 2 minutes
5: Peser le produit humide (W2)
6: Calculer la capacité de rétention d'eau: WHC=(W2-W1)/W1

Dans le cas où la composition est une composition sous forme de flocons de 5 à 10 mm, la capacité de rétention d'eau est avantageusement d'environ 3 g/g, 3,1 g/g, 3,2 g/g, 3,3 g/g, 3,4 g/g ou 3,5 g/g.

Dans un mode de réalisation, la composition alimentaire selon l'invention est une composition à base de protéines de fèves, de pois et d'avoine, et comprend environ 65% de protéines végétales, environ 12% de glucides, environ 5,4% de lipides, environ 11% de fibres. Ladite composition est mise en forme de flocons et présente avantageusement une densité apparente de 160 g/L, +/- 20 g/L et une WHC d'environ 3,2 g/g.

Dans un autre mode de réalisation la composition alimentaire est sous forme de morceaux calibrés. Les morceaux ont par exemple une longueur comprise entre environ 10 mm et environ 40 mm et une largeur comprise entre environ 5 mm et environ 30 mm.

Avantageusement, lesdits morceaux ont une apparente comprise entre 70 g/L et 280 g/L, notamment une densité apparente d'environ 70 g/L, 80 g/L, 90 g/L, 100 g/L, 110 g/L, 120 g/L, 130 g/L, 140 g/L, 150 g/L, 160 g/L, 170 g/L, 180 g/L, 190 g/L, 200 g/L, 210 g/L, 220 g/L, 230 g/L, 240 g/L, 250 g/L, 260 g/L, 270 g/L, 280 g/L. Par exemple, lesdits morceaux ont une densité apparente de 90 g/L+/- 20 g/L, 100 g/L+/- 20 g/L, 110 g/L, +/- 20 g/L, 120 g/L+/- 20 g/L, 130 g/L, +/- 20 g/L, 140 g/L+/- 20 g/L, 150 g/L, +/- 20 g/L, 160 g/L+/- 20 g/L, 170 g/L, +/- 20 g/L, 180 g/L+/- 20 g/L, 190 g/L, +/- 20 g/L, 200 g/L+/- 20 g/L, 210 g/L, +/- 20 g/L, 220 g/L+/- 20 g/L, 230 g/L, +/- 20 g/L, 240 g/L +/- 20 g/L, 250 g/L+/- 20 g/L, 260 g/L+/- 20 g/L.

La composition selon l'invention sous forme de morceaux calibrés présente avantageusement une capacité de rétention d'eau comprise entre 1,5 et 3,5 g/g, notamment d'environ 1,5 g/g, 1,6 g/g, 1,7 g/g, 1,8 g/g, 1,9 g/g, 2 g/g, 2,1 g/g, 2,2 g/g, 2,3 g/g, 2,4 g/g, 2,5 g/g, 2,6 g/g, 2,7 g/g, 2,8 g/g, 2,9 g/g, 3 g/g, 3,1 g/g, 3,2 g/g, 3,3 g/g, 3,4 g/g ou 3,5 g/g.

Dans un exemple de réalisation, ladite composition selon l'invention sous forme de morceaux calibrés comprend entre 70 et 75% en poids de protéines végétales et entre 10 et 12% en poids de fibres, lesdits morceaux ayant une densité apparente d'environ 235 g/L, +/- 20 g/L et une capacité de rétention d'eau d'environ 2 g/g. Par exemple, ladite composition comprend environ 72% en poids d'un mélange de protéines de fèves et de blé, environ 9,5% en poids de glucides, environ 3,8% en poids de lipides, environ 11% en poids de fibres.

Dans un autre exemple de réalisation, ladite composition selon l'invention sous forme de morceaux calibrés comprend entre 55 et 65% en poids de protéines végétales et entre 12 et 15% en poids de fibres, lesdits morceaux ayant une densité apparente d'environ 112 g/L, +/- 20 g/L et une capacité de rétention d'eau comprise d'environ 1,8 g/g. Par exemple, ladite composition comprend environ 60% en poids d'un mélange de protéines de pois et d'avoine, environ 15% en poids de glucides, environ 5,3% en poids de lipides, environ 13% en poids de fibres.

Dans un autre exemple de réalisation, la composition selon l'invention sous forme de morceaux calibrés comprend entre 55 et 60% en poids de protéines végétales et entre 15 et 17% en poids de fibres, lesdits morceaux ayant une densité apparente d'environ 117 g/L, +/- 20 g/L et une capacité de rétention d'eau comprise d'environ 1,6 g/g. Par exemple, ladite composition comprend environ 58% en poids d'un mélange de protéines de tournesol, pois et lentilles, environ 9,3% en poids de glucides, environ 6% en poids de lipides, environ 17% en poids de fibres.

Dans un autre mode de réalisation, la composition alimentaire selon l'invention est sous forme de granules de longueur comprise entre 5 mm et 30 mm et de diamètre compris entre 1 mm et 5 mm.

Avantageusement, lesdits granules ont une densité apparente comprise entre 100 g/L et 160 g/L. Par exemple, lesdits granules ont une densité apparente de 110 g/L, +/- 10 g/L, 120 g/L, +/- 10 g/L, 130 g/L, +/- 10 g/L, 140 g/L, +/- 10 g/L, 150 g/L, +/- 10 g/L.

La composition selon l'invention sous forme de granules présente avantageusement une capacité de rétention d'eau comprise entre 1,5 et 3,5 g/g, notamment d'environ 1,5 g/g, 1,6 g/g, 1,7 g/g, 1,8 g/g, 1,9 g/g, 2 g/g, 2,1 g/g, 2,2 g/g, 2,3 g/g, 2,4 g/g, 2,5 g/g, 2,6 g/g, 2,7 g/g, 2,8 g/g, 2,9 g/g, 3 g/g, 3,1 g/g, 3,2 g/g, 3,3 g/g, 3,4 g/g ou 3,5 g/g.

Dans un exemple de réalisation, ladite composition selon l'invention sous forme de granules comprend entre 50 et 60% en poids de protéines végétales et entre 10 et 15% en poids de fibres, lesdits granules ayant une densité apparente entre environ 110 g/L et 150 g/L, et une capacité de rétention d'eau entre environ 2 et 3 g/g. Par exemple, ladite composition comprend environ 65% de protéines végétales (telles que des protéines de fèves, de pois et d'avoine), environ 12% de glucides, environ 5,4% de lipides et environ 11% de fibres. Ladite composition est mise en forme de granules de longueur entre environ 5 mm et environ 15 mm, et de diamètre entre environ 3 mm et environ 5 mm, et présente avantageusement une densité apparente de 120 g/L, +/- 20 g/L et une WHC d'environ 2,5 g/g.

Avantageusement, la composition alimentaire à base de protéines végétales texturées selon l'invention présente une digestibilité améliorée par rapport aux compositions végétales de l'art antérieur. Notamment, la digestibilité des compositions selon l'invention se rapproche de celle des produits carnés ou poissons qu'elle est destinée à remplacer en totalité ou en partie.

La digestibilité de la composition alimentaire selon l'invention peut s'évaluer par le DIAAS (« Digestible Indispensable Amino Acid Score » - FAO 2013). Le DIAAS se définit comme suit : $DIAAS = 100 \times \frac{mg AAEL digestibles dans 1 g de la protéine alimentaire}{mg des mêmes AAEL digestibles dans 1 g de la protéine de référence} ,$

AAEL étant l'acide aminé limitant, c'est-à-dire celui dont le rapport est le plus faible. Par exemple, pour le pois les acides aminés limitants sont la méthionine et la cystéine. Pour le riz l'acide aminé limitant est la lysine.

La digestibilité est basée sur la digestibilité iléale chez l'homme pour chaque acide aminé.

Le DIAAS des compositions selon l'invention est avantageusement supérieur ou égal à 70, préférentiellement supérieur ou égal à 80, supérieur ou égal à 85, plus préférentiellement supérieur ou égal à 90, supérieur ou égal à 95, encore plus préférentiellement supérieur à 100. Ainsi le DIAAS des compositions alimentaires selon l'invention est semblable à celui des produits animaux.

### Matières premières

Les inventeurs ont mis au point une composition alimentaire à base de protéines végétales texturées présentant des qualités organoleptiques très similaires à celles de la viande ou du poisson. Notamment, les inventeurs ont mis au point des compositions présentant une texture et une jutosité se rapprochant de la texture et de la jutosité attendue pour différents produits carnés. Plus précisément, les inventeurs ont découvert qu'il est possible de jouer sur la teneur et la composition en protéines des compositions alimentaires à base de protéines texturées, en mélangeant des protéines de légumineuses sous forme de concentrat de protéines et des protéines de céréales et/ou oléagineux. En jouant sur la forme des apports en protéines de légumineuses, de céréales et/ou oléagineux (isolat et/ou concentrat), il est possible d'adapter les qualités organoleptiques de la composition alimentaire aux besoins des consommateurs.

Ainsi, les inventeurs ont découvert qu'il est particulièrement avantageux d'utiliser un concentrat protéique de légumineuse et de le mélanger à au moins une autre source de protéines, choisie parmi les protéines de céréales et les protéines d'oléagineux.

La composition alimentaire selon l'invention est donc avantageusement obtenue à partir d'un mélange de matières premières comprenant un concentrat protéique de légumineuse et au moins une source protéique additionnelle choisie parmi les protéines de céréales et les protéines d'oléagineux.

Par exemple, une source protéique additionnelle du mélange de matières premières peut être un concentrat protéique de céréales ou un concentrat protéique d'oléagineux. De manière alternative ou additionnelle, une source protéique additionnelle du mélange de matières premières peut être un isolat protéique de céréales ou un isolat protéique d'oléagineux, notamment un isolat de blé (gluten).

La présente invention a donc également pour objet un mélange de matières premières sèches destiné à être extrudé pour la fabrication d'une composition alimentaire à base de protéines végétales texturées, ledit mélange comprenant entre 50% et 75% en poids de concentrat de protéines végétales, entre 0 et 25% en poids d'isolat de protéines végétales et entre 0 et 5% en poids de fibres ajoutées. Notamment, l'invention a pour objet un mélange de matières premières sèches, comprenant entre 50% et 75% en poids de concentrat de protéines végétales, choisi parmi les concentrats protéiques de légumineuses et les concentrats protéiques de céréales ou d'oléagineux, entre 0 et 50% en poids d'isolat de protéines végétales, choisis parmi les isolats protéiques de légumineuse et les isolats de blé (gluten), et entre 0 et 5% en poids de fibres végétales ajoutées, ledit mélange étant avantageusement un mélange de poudres.

Selon l'invention, le mélange de matières premières est un mélange de matières premières sèches.

Dans un mode de réalisation, le mélange de matières premières comprend entre 20% et 60% en poids de concentrat protéique de légumineuse et entre 15% et 55% en poids de source protéique additionnelle, choisie parmi les protéines de céréales et/ou d'oléagineux. Par exemple, le mélange de matières premières comprend environ 20%, 25%, 30%, 35%, 40%, 45%, 50%, 55%, ou 60% en poids de concentrat protéique de légumineuse. Le mélange de matières premières peut également comprendre environ 15%, 20%, 25%, 30%, 35%, 40%, 45%, 50%, 55% en poids d'une source protéique additionnelle, différente du concentrat de protéines de légumineuse.

Les % en poids en lien avec le mélange de matières premières s'entend par rapport au poids total du mélange de matières premières sèches. Avantageusement, le mélange de matières premières est un mélange de poudres.

Selon l'invention, il est possible de prévoir un apport en fibres végétales additionnelles, en plus des fibres contenues dans les concentrats et isolats de protéines utilisés pour réaliser la composition alimentaire. Ces fibres ajoutées peuvent par exemple être des fibres de pois. Par exemple, le mélange de matières premières comprend entre 1% et 5% en poids de fibres ajoutées, notamment des fibres de pois, préférentiellement entre 1,5% et 2,5% en poids.

Dans un mode de réalisation, le mélange de matières premières comprend également un isolat protéique de légumineuse. Ainsi, le mélange de matières premières comprend un concentrat de légumineuse et un isolat de légumineuse, ainsi qu'un isolat ou concentrat de céréales et/ou oléagineux. Par exemple, le mélange de matières premières peut comprend entre 20% et 25% en poids d'isolat protéique de légumineuse, notamment, environ 20%, 21%, 22%, 23%, 24%, 25%.

Dans un exemple de réalisation, le mélange de matière première comprend environ 20%, 25%, 30%, 35%, 40%, 45%, 50%, 55%, ou 60% en poids de concentrat protéique de légumineuse, environ 20%, 21%, 22%, 23%, 24%, 25% en poids d'isolat protéique de légumineuse, environ 15%, 20%, 25%, 30%, 35%, 40%, 45%, 50%, 55% en poids d'isolat ou concentrat de céréales et/ou oléagineux. Ledit mélange de matières premières comprend en outre entre 1% et 5% en poids de fibres ajoutées, notamment des fibres de pois, préférentiellement entre 1,5% et 2,5% en poids.

La composition alimentaire selon l'invention peut être obtenue à partir d'un mélange de matières premières comprenant entre 70% et 75% en poids de concentrat protéique, entre 20% et 25% en poids d'isolat protéique et entre 0% et 5% en poids de fibres ajoutées. Dans un exemple de réalisation, la composition alimentaire selon l'invention est obtenue à partir d'un mélange de matières premières comprenant entre 50% et 60% en poids de concentrat protéique de légumineuse, entre 20% et 25% en poids d'isolat protéique de légumineuse, entre 18% et 25% en poids de concentrat protéique de céréales et entre 1,5% et 2,5% en poids de fibres ajoutées. Dans un autre exemple de réalisation, la composition alimentaire selon l'invention est obtenue à partir d'un mélange de matières premières comprenant entre 20% et 25% en poids de concentrat protéique de légumineuse, entre 20% et 25% en poids d'isolat protéique de légumineuse, entre 50% et 55% en poids de concentrat protéique d'oléagineux et entre 1,5% et 2,5% en poids de fibres ajoutées.

Préférentiellement, le concentrat protéique de légumineuse et l'isolat protéique de légumineuse sont obtenus à partir de légumineuses différentes pour l'un et pour l'autre. Par exemple, on utilise un concentrat de fève ou lentille et un isolat de pois.

La composition alimentaire selon l'invention peut également être obtenue à partir d'un mélange de matières premières comprenant environ 50% en poids de concentrat protéique de légumineuse et environ 50% en poids d'isolat protéique de céréales, plus particulièrement d'isolat protéique de blé (gluten).

Selon l'invention, le ou les concentrats de protéines sont avantageusement choisis parmi un concentrat de pois, un concentrat de pois chiche, un concentrat de haricot, un concentrat de fève, un concentrat de fèverole, un concentrat de lentille, un concentrat de lupin, un concentrat de blé, un concentrat d'avoine, un concentrat de maïs, un concentrat de riz, un concentrat d'orge, un concentrat de seigle, un concentrat de sarrazin, un concentré de millet, un concentrat de quinoa, un concentrat de triticale, un concentrat de tournesol, un concentrat de colza, un concentrat d'olive, un concentrat d'arachide, un concentrat de canola, un concentrat de citrouille, et n'importe quel mélange de ceux-ci.

Le ou les isolats de protéines sont avantageusement choisis parmi un isolat de pois, un isolat de pois chiche, un isolat de haricot, un isolat de fève, un isolat de fèverole, un isolat de lentille, un isolat de lupin, un isolat de blé (gluten), un isolat d'avoine, un isolat de maïs, un isolat de riz, un isolat d'orge, un isolat de seigle, un isolat de sarrazin, un isolat de millet, un isolat de quinoa, un isolat de triticale, un isolat de tournesol, un isolat de colza, un isolat d'olive, un isolat d'arachide, un isolat de canola, un isolat de citrouille et n'importe quel mélange de ceux-ci.

Le mélange de matières premières sèches selon l'invention est préférentiellement un mélange de poudres.

La présente invention a notamment pour objet un mélange de matières premières sèches dans lequel le pourcentage total en poids des concentrats de protéines végétales dans le mélange de matières premières est compris entre 50% et 75%, et le pourcentage total en poids des isolats de protéines végétales est compris entre 23% et 25%.

Dans un mode de réalisation, le mélange de matières premières sèches comprend entre 30% et 60% en poids de concentrat protéique de légumineuse, entre 20% et 25% en poids d'isolat protéique de légumineuse, entre 15% et 45% en poids de concentrat protéique de céréales et environ 2% en poids de fibres ajoutées.

Par exemple, le mélange de matières premières comprend environ 51% en poids de concentrat de fève, environ 23% en poids d'isolat de pois, environ 24% en poids de concentrat d'avoine et environ 2% en poids de fibres de pois. La composition alimentaire à base de protéines texturées obtenue à partir de ce mélange comporte avantageusement environ 65% en poids de protéines, environ 12% en poids de glucides, environ 5,4 % en poids de lipides et environ 11% en poids de fibres. Le DIAAS d'une telle composition est avantageusement compris entre environ 80 et environ 90, notamment environ de 85. Ladite composition est par exemple mise en forme de flocons, présentant une densité apparente d'environ 160 g/L, +/- 20 g/L et une WHC d'environ 3,2 g/g. Alternativement, la composition peut être mise en forme de granules, présentant une densité apparente d'environ 120 g/L, +/- 20 g/L et une WHC d'environ 2,5 g/g.

Dans un autre exemple, le mélange de matières premières comprend environ 56% en poids de concentrat de pois, environ 23 % en poids d'isolat de pois, environ 19% en poids de concentrat d'avoine et environ 2% en poids de fibres de pois. La composition alimentaire à base de protéines texturées obtenue à partir de ce mélange comporte avantageusement environ 60% en poids de protéines, environ 15% en poids de glucides, environ 5,3 % en poids de lipides et environ 13% en poids de fibres. Le DIAAS d'une telle composition est avantageusement compris entre environ 85 et environ 95, notamment environ 90. La composition est par exemple mise en forme de morceaux calibrés, présentant une densité apparente d'environ 112 g/L, +/-20 g/L et une WHC d'environ 1,8 g/g.

Dans un autre mode de réalisation, le mélange de matières premières sèches comprend entre 20% et 45% en poids de concentrat protéique de légumineuse, entre 20% et 25% en poids d'isolat protéique de légumineuse, entre 30% et 55% en poids de concentrat protéique d'oléagineux et environ 2% en poids de fibres ajoutées. Notamment, le mélange de matières premières sèches comprend entre 20% et 25% en poids de concentrat protéique de légumineuse, entre 20% et 25% en poids d'isolat protéique de légumineuse, entre 50% et 55% en poids de concentrat protéique d'oléagineux et environ 2% en poids de fibres ajoutées.

Par exemple, le mélange de matières premières comprend environ 24% en poids de concentrat de lentille, environ 24% en poids d'isolat de pois, environ 51% en poids de concentrat de tournesol et environ 2% en poids de fibres de pois. La composition alimentaire à base de protéines texturées obtenue à partir de ce mélange comporte avantageusement environ 58% en poids de protéines, environ 9,3% en poids de glucides, environ 6 % en poids de lipides et environ 17% en poids de fibres. Le DIAAS d'une telle composition est avantageusement compris entre environ 90 et environ 100, notamment environ 95. La composition est par exemple mise en forme de morceaux calibrés, présentant une densité apparente d'environ 117 g/L, +/- 20 g/L et une WHC d'environ 1,6 g/g.

La présente invention a également pour objet un mélange de matières premières sèches comprenant environ 50% en poids de concentrat protéique de légumineuse, et environ 50% en poids d'isolat protéique de céréales, préférentiellement d'isolat protéique de blé (gluten).

Par exemple, le mélange de matières premières comprend environ 50% de concentrat de fèves et environ 50% d'isolat de blé. La composition alimentaire à base de protéines texturées obtenue à partir de ce mélange comporte avantageusement environ 72% en poids de protéines, environ 9,5% en poids de glucides, environ 3,8 % en poids de lipides et environ 11% en poids de fibres. Le DIAAS d'une telle composition est avantageusement compris entre environ 70 et environ 80, notamment environ 71. La composition est par exemple mise en forme de morceaux calibrés, présentant une densité apparente d'environ 235 g/L, +/- 20 g/L et une WHC d'environ 2 g/g.

### Procédé de fabrication

La composition alimentaire à base de protéines texturées selon l'invention peut être obtenue avec n'importe quel procédé de texturation connu de l'homme du métier.

Notamment, les compositions alimentaires selon l'invention peuvent être obtenues par cuisson extrusion dans une extrudeuse, telle qu'une extrudeuse bi-vis. La température de chauffe, la pression et le cisaillement dans la filière de l'extrudeuse permettent de dénaturer les protéines. A la sortie de la filière, les protéines s'associent par différentes interactions biochimiques et la décompression confère une texture aérée au produit.

Classiquement, le cylindre de l'extrudeuse, dans lequel se trouvent les deux vis, est divisé en segments pouvant être chauffés indépendamment les uns des autres, pour créer un gradient de température défini. Par ailleurs, les vis peuvent être configurées différemment, avec des segments favorisant le mélange, le malaxage et/ou l'entrainement de la matière à l'intérieur de l'extrudeuse. Notamment, le rapport longueur/diamètre peut varier. Les vis peuvent également fonctionner à des vitesses d'entraînement différentes.

D'une manière générale, il est possible de jouer sur la configuration des vis, la température des segments, la teneur en humidité, le débit d'alimentation et/ou la vitesse des vis, ainsi que les matières premières. L'homme du métier est à même de moduler les différents paramètres de l'extrudeuse en fonction de la matière première sèche utilisée et de la forme finale souhaitée pour la composition alimentaire à base de protéines texturées (Marie-Christine Baune et al. 2022 Future Foods, « Textured vegetable proteins (TVP) : Future foods standing on the meat alternatives »).

La présente invention a donc également pour objet un procédé de fabrication d'une composition alimentaire à base de protéines texturées tel que décrit ci-dessus, comprenant les étapes selon lesquelles
a) On introduit un mélange de matières premières sèches tel que décrit ci-dessus et de l'eau dans une extrudeuse ;
b) On extrude ledit mélange à une température comprise entre 30°C et 170°C ;
c) On sèche la composition en sortie d'extrudeuse.

Selon l'invention, l'eau est avantageusement ajoutée dans l'extrudeuse sous forme liquide. De manière alternative ou cumulative, l'eau apportée sous forme de vapeur d'eau. La quantité d'eau ajoutée doit permettre d'humidifier le mélange de matières premières sèches, de manière à assurer une bonne plasticité lors de l'extrusion.

Préférentiellement, le mélange de matières sèches introduit dans l'extrudeuse ne contient que les isolats et concentrats protéiques et éventuellement des fibres végétales ajoutées, comme décrit ci-dessus. Ainsi, le mélange de matières premières ainsi que la composition alimentaire obtenue au sortir de l'extrudeuse sont avantageusement exempts d'additifs tels que des agents texturants.

Préférentiellement, le mélange de matières premières sèches et le liquide sont introduits séparément dans l'extrudeuse. Dans ce cas, le mélange de matières premières sèches est avantageusement introduit en amont du liquide. Bien entendu, il est possible autrement de mélanger le mélange de matières premières sèches et le liquide hors de l'extrudeuse de manière à former une pate humide, ladite pâte étant ensuite introduite dans l'extrudeuse pour l'étape d'extrusion.

Lors de l'étape d'extrusion, le mélange traverse avantageusement différentes zones de chauffe au sein de l'extrudeuse, de manière à soumettre le mélange à différentes températures. Par exemple, l'extrudeuse présente une première zone de chauffe comprise entre 30 et 40°C, une seconde zone de chauffe comprise entre 50°C et 60°C, une troisième zone de chauffe comprise entre 100°C et 110°C, une quatrième zone de chauffe comprise entre 110 et 135°C, une cinquième zone de chauffe comprise entre 115 et 140°C et une sixième zone de chauffe comprise entre 110 et 150°C,

De même, le mélange est avantageusement soumis à des pressions variables au fur et à mesure de l'extrusion. Par exemple, la pression maximale au sein de l'extrudeuse est comprise entre 15 MPa et 20 MPa, notamment environ 17 MPa, 18 MPa, 19 MPa. Avantageusement, la pression en sortie de filière, avant la chute brutale de pression en sortie d'extrudeuse, est comprise entre 17 MPa et 19 MPa.

La composition alimentaire est ensuite refroidie et séchée pour stabiliser la texture. Avantageusement, la composition est séchée jusqu'à ce que le taux d'humidité soit inférieur ou égal à 14% en poids sur la base du poids total de ladite composition, préférentiellement inférieur ou égal à 12% en poids du poids total de ladite composition. Dans un mode de réalisation, la composition alimentaire comprend entre 2% et 14% d'humidité, préférentiellement entre 5% et 12% en poids d'humidité, notamment entre 2% et 5%, entre 5% et 10%, entre 6% et 8%, entre 8% et 10%, entre 10% et 12%, entre 8% et 14%, entre 10% et 14%, entre 12% et 14%.

La composition peut ensuite être coupée en morceaux, broyée, mise en forme de granules, billettes, lamelles, rectangle, carrés etc., en fonction des besoins.

### Utilisations

La présente invention vise également toute utilisation des compositions alimentaires à base de protéines végétales texturées telles que décrites ci-dessus. Les compositions alimentaires selon l'invention peuvent être avantageusement utilisées en remplacement total ou partiel d'une source de protéines animales, telle que de la viande ou le poisson, pour la réalisation d'un produit alimentaire. Les compositions alimentaires selon l'invention peuvent également être utilisées en remplacement de produits alimentaires autres que les produits animaux. Ainsi, les compositions alimentaires, notamment sous forme de flocons ou granules, peuvent être utilisées en remplacement de la chapelure classique, notamment dans les produits panés.

Les compositions alimentaires selon l'invention peuvent être utilisées aussi bien au niveau industriel, pour la fabrication de plats cuisinés à base de protéines végétales, que directement par le consommateur, de manière à réaliser lui-même des recettes telles que des plats en sauces. Si cela est souhaité, la composition alimentaire à base de protéines végétales texturées selon l'invention peut être utilisée en remplacement partiel seulement de la viande ou du poisson dans une recette traditionnelle. Notamment, il est possible de remplacer une partie de la viande hachée dans une recette traditionnelle, par une composition alimentaire selon l'invention sous forme de granules ou flocons préalablement réhydratés avant d'être mélangés aux autres ingrédients.

La composition alimentaire est avantageusement réhydratée avant d'être cuisinée et/ou mise en forme selon le produit alimentaire souhaité. Par exemple, la composition alimentaire selon l'invention peut être utilisée de manière à fabriquer un aliment dans lequel la composition alimentaire selon l'invention est destinée à remplacer totalement ou partiellement un produit carné. Notamment, un tel aliment peut être sélectionné parmi des boulettes, de la farce, du steak, des nuggets, des morceaux, du haché, utilisé par exemple sur les pizzas, de la saucisse, une sauce, des galettes végétales, des rillettes, des aiguillettes, des émincés, du hachis, tel que le hachis parmentier, du pâté, etc. De manière alternative, la composition alimentaire selon l'invention peut être utilisée de manière à fabriquer un aliment dans lequel la composition alimentaire selon l'invention est destinée à remplacer totalement ou partiellement un produit de la mer. Notamment, un tel aliment peut être sélectionné parmi les rillettes de succédané de poisson, les miettes de succédané de poisson, un succédané de poisson pané, etc. Comme indiqué ci-dessus, la chapelure nécessaire aux produits panés (succédané de poisson pané, nuggets, etc.) peut avantageusement être remplacée par une composition selon l'invention, mise en forme de chapelure.

L'invention a donc également pour objet un produit alimentaire obtenu à partir de la composition alimentaire à base de protéines texturées selon l'invention. Le produit alimentaire comprend avantageusement la composition alimentaire à base de protéines végétales texturées selon l'invention comme seule source de protéines. De manière alternative, le produit alimentaire est un produit hybride comprenant la composition alimentaire à base de protéines végétales texturées selon l'invention et une autre source de protéines, d'origine animale.

Les produits alimentaires selon l'invention peuvent notamment être des galettes de succédanés de viande, telles que des « burgers », des boulettes, des nuggets, du hachis, des morceaux tels que ceux utilisés pour les « sautés », de la sauce, des saucisses, de la farce, des rillettes, des aliments panés, etc.

Par exemple, le produit alimentaire est une sauce bolognaise comprenant, en remplacement de la viande hachée traditionnelle, une composition alimentaire à base de protéines végétales texturées selon l'invention, sous forme de granules réhydratés.

Dans un autre exemple selon l'invention, le produit alimentaire est un hachis parmentier comprenant, en remplacement de la viande hachée traditionnelle, une composition alimentaire à base de protéines végétales texturées selon l'invention, sous forme de flocons réhydratés.

Si le produit alimentaire doit offrir une consistance à base de morceaux plus gros, comme dans le cas d'une recette de curry par exemple, le produit alimentaire peut comprendre, en remplacement des morceaux de viande traditionnels, une composition alimentaire à base de protéines végétales texturées selon l'invention, sous forme de morceaux calibrés réhydratés. Notamment, de telles recettes en sauce peuvent avantageusement être obtenues en utilisant une composition selon l'invention comprenant des protéines de lentilles et tournesol, telle que décrite ci-dessus.

Dans un autre exemple de réalisation, le produit alimentaire comprend des boulettes ou galettes obtenues en remplaçant la viande par une composition alimentaire à base de protéines végétales texturées selon l'invention, sous forme de flocons réhydratés et mélangés aux autres ingrédients de la recette avant d'être mis en forme de boulettes ou galettes. Notamment, de telles boulettes et galettes peuvent avantageusement être obtenues en utilisant une composition selon l'invention comprenant des protéines de fèves et de blé (gluten) telle que décrite ci-dessus.

Dans un autre exemple de réalisation, le produit alimentaire comprend des nuggets, obtenus en remplaçant la volaille par une composition alimentaire à base de protéines végétales texturées selon l'invention, sous forme de flocons réhydratés et mélangés aux autres ingrédients de la recette avant d'être mis en forme de nuggets, puis panés. Notamment, de tels nuggets peuvent être avantageusement réalisés à partir d'une composition selon l'invention comprenant des protéines de fèves et d'avoine telle que décrite ci-dessus.

### EXEMPLES

### A] Matières premières utilisées

Les pourcentages (%) s'entendent en poids, pour 100g de produit sec. Le pourcentage de protéines est mesuré avec la méthode Kjeldahl, et en prenant en compte la quantité d'azote (N) présent dans les acides aminés, multipliée par un facteur de conversion de 6,25 (N x 6,25).

### A1. Concentrat de protéines de fèves

Humidité 10 %
Protéines 65 %
Lipides : 4,5 %
Glucides : 10%

### A2. Concentrat de protéines de lentilles

Humidité 10 %
Protéines 51,4%
Lipides : 3,2 %
Glucides : 22,1%

### A3. Concentrat de protéines d'avoines

Humidité < 6 %
Protéines 53%
Lipides : 13 %
Glucides : 21%

### A4. Concentrat de protéines de pois

Humidité 10 %
Protéines 55%
Lipides : 5 %
Glucides : 17%

### A5. Isolat de protéines de pois

Humidité 10 % max
Protéines 84% min

### A6. Concentrat de protéines de tournesol

Humidité 7,7 %
Protéines 53%
Lipides : 10,3%
Glucides : 4,9%

### A7. Isolat de blé (gluten)

Humidité <8 %
Protéines : 80%
Lipides : 3 %
Glucides : 9%

### A8. Fibres de pois

Fibres alimentaires 85-90% (mesuré selon la méthode AOAC)
Glucides 3-4 %
Protéines 3-6%
Humidité < 8%
Granulométrie : > 32 µm : 70-80 % // > 63 µm : 45-65% // > 100 µm : 5-10%

### B] Compositions alimentaires

Dans les exemples ci-dessous, différentes compositions alimentaires selon l'invention sont décrites. Ces compositions sont obtenues par extrusion cuisson dans une extrudeuse bi-vis présentant 6 zones de chauffe (Z1, Z2, Z3, Z4, Z5 et Z6) indépendantes, selon les paramètres résumés dans les tableaux ci-dessous.

D'une manière générale, les températures indiquées pour chaque zone de chauffe correspondent à la température consigne / température réelle mesurée à l'extérieure du fourreau de l'extrudeuse.

La pression correspond à la pression en sortie de filière.

La SME (« Specific Mechanical Energy"), en wh/kg, se calcule selon la formule ci-dessous: SME = (vitesse de vis x intensité x puissance extrudeur x coefficient de régulation) / (vitesse de vis max de l'extrudeur x (débit matières premières + débit eau) x intensité maximale de l'extrudeur)
vitesse de vis : en tours par minutes (rpm)
intensité : en ampères (A)
débit matières premières : en kg/h
débit eau : en kg/h ou L/h
puissance extrudeur : 44 000 W :
   coefficient de régulation : 0,9;
   vitesse de vis maximale de l'extrudeur : 612
   intensité maximale de l'extrudeur : 106 A

La densité est mesurée selon le test A décrit ci-dessus.

La capacité de rétention d'eau (WHC) est mesurée selon le test B décrit ci-dessus.

Les % de protéines, glucides, lipides et fibres dans les compositions alimentaires s'entendent des % en poids pour 100g de composition.

### B1. Composition à base de protéines de fèves et avoine

**Tableau 1 : Caractéristiques des matières premières utilisées**

| Matières premières (MP) | | |
|---|---|---|
| % de chaque matière première | Débit d'entrée MP (kg/h) | Débit d'entrée Eau (kg/h) |
| -Concentrat de fève : 51 | 100 | 15 |
| -Isolat de pois : 23 | | |
| -concentrat d'avoine :24 | | |
| -fibres de pois : 2 | | |

Les tableaux 2A et 2B ci-dessous résument les caractéristiques de l'extrudeuse pour la préparation d'une composition selon l'invention sous forme de flocons (tableau 2A) ou de granules (tableau 2B).

**Tableau 2A : Caractéristiques de l'extrudeuse pour les flocons**

| Temp. Z1 (°C) | Temp. Z2 (°C) | Temp. Z3 (°C) | Temp. Z4 (°C) | Temp. Z5 (°C) | Temp. Z6 (°C) | Pression (bar) | SME (Wh/kg) |
|---|---|---|---|---|---|---|---|
| 30/30 | 60/60 | 115/114 | 125/121 | 130/134 | 140/140 | 18 | 146 |

| | | | | | | | |
|---|---|---|---|---|---|---|---|
| Temp. : température | | | | | | | |

**Tableau 2B : Caractéristiques de l'extrudeuse pour les granules**

| Temp. Z1 (°C) | Temp. Z2 (°C) | Temp. Z3 (°C) | Temp. Z4 (°C) | Temp. Z5 (°C) | Temp. Z6 (°C) | Pression (bar) | SME (Wh/kg) |
|---|---|---|---|---|---|---|---|
| 30/30 | 60/58 | 115/110 | 120/118 | 125/127 | 140/140 | 28 | 68 |

| | | | | | | | |
|---|---|---|---|---|---|---|---|
| Temp. : température | | | | | | | |

Les tableaux 3A et 3B ci-dessous résument les caractéristiques des produits obtenus.

**Tableau 3A : Caractéristiques de la composition alimentaire fèves/avoine sous forme de flocons**

| Format | Dimensions (mm) | Densité g/L | WHC g/g | Humidité (%) | Couleur | Protéines (%) | Glucides (%) | Lipides (%) | Fibres (%) |
|---|---|---|---|---|---|---|---|---|---|
| Flocons | 12x8 / 2x1(*) | 169 | 2,252 | 8,75 | Beige clair | 65 | 12 | 5,4 | 11 |

| | | | | | | | | | |
|---|---|---|---|---|---|---|---|---|---|
| (*) le 1^{er} jeu de valeurs correspond aux dimensions (longueur x largeur) mesurées pour les plus grands flocons, le 2^{ème} jeu correspondant aux dimensions (longueur x largeur) mesurées pour les plus petits flocons. | | | | | | | | | |

**Tableau 3B : Caractéristiques de la composition alimentaire fèves/avoine sous forme de granules**

| Format | Dimensions (mm) | Densité g/L | WHC g/g | Humidité (%) | Couleur | Protéines (%) | Glucides (%) | Lipides (%) | Fibres (%) |
|---|---|---|---|---|---|---|---|---|---|
| Granules | 15x4 : 5x3(*) | 121 | 2,514 | 5,9 | Beige clair | 65 | 12 | 5,4 | 11 |

| | | | | | | | | | |
|---|---|---|---|---|---|---|---|---|---|
| (*) le 1^{er} jeu de valeurs correspond aux dimensions (longueur x largeur) mesurées pour les plus grands flocons, le 2^{ème} jeu correspondant aux dimensions (longueur x largeur) mesurées pour les plus petits flocons. | | | | | | | | | |

### B2. Composition à base de protéines de fèves et gluten

**Tableau 4 : Caractéristiques des matières premières utilisées**

| Matières premières | | |
|---|---|---|
| % de chaque matière première | Débit d'entrée MP (kg/h) | Débit d'entrée Eau (kg/h) |
| -Concentrat de fève : 50 | 60 | 14 |
| -Isolat de blé : 50 | | |

**Tableau 5 : Caractéristiques de l'extrudeuse**

| Temp. Z1 (°C) | Temp. Z2 (°C) | Temp. Z3 (°C) | Temp. Z4 (°C) | Temp. Z5 (°C) | Temp. Z6 (°C) | Pression (bar) | SME (Wh/kg) |
|---|---|---|---|---|---|---|---|
| 30/30 | 60/57 | 100/99 | 115/110 | 115/114 | 110/112 | 19 | 266 |

| | | | | | | | |
|---|---|---|---|---|---|---|---|
| Temp. : température | | | | | | | |

En sortie d'extrudeur, la composition est coupée et mise en forme de flocons. Le tableau 6 ci-dessous résume les caractéristiques des morceaux calibrés obtenus.

**Tableau 6 : Caractéristiques de la composition alimentaire fèves et gluten**

| Format | Dimensions (mm) | Densité g/L | WHC g/g | Humidité (%) | Couleur | Protéines (%) | Glucides (%) | Lipides (%) | Fibres (%) |
|---|---|---|---|---|---|---|---|---|---|
| Morceaux | 16x8 / 10x8(*) | 232 | 1,652 | 8,76 | Beige | 72 | 9,5 | 3,8 | 11 |

| | | | | | | | | | |
|---|---|---|---|---|---|---|---|---|---|
| (*) le 1^{er} jeu de valeurs correspond aux dimensions (longueur x largeur) mesurées pour les plus grands morceaux, le 2^{ème} jeu correspondant aux dimensions (longueur x largeur) mesurées pour les plus petits morceaux. | | | | | | | | | |

### B3. Composition à base de protéines de pois et avoine

**Tableau 7 : Caractéristiques des matières premières utilisées**

| Matières premières | | |
|---|---|---|
| % de chaque matière première | Débit d'entrée MP (kg/h) | Débit d'entrée Eau (kg/h) |
| -Concentrat de pois : 56,25 | 90 | 9,8 |
| -Isolat de pois : 23 | | |
| -Concentrat d'avoine :18,75 | | |
| -Fibres de pois : 2 | | |

**Tableau 8 : Caractéristiques de l'extrudeuse**

| Temp. Z1 (°C) | Temp. Z2 (°C) | Temp. Z3 (°C) | Temp. Z4 (°C) | Temp. Z5 (°C) | Temp. Z6 (°C) | Pression (bar) | SME (Wh/kg) |
|---|---|---|---|---|---|---|---|
| 30/30 | 60/61 | 115/108 | 135/124 | 135/134 | 150/145 | 17 | 163 |

| | | | | | | | |
|---|---|---|---|---|---|---|---|
| Temp. : température | | | | | | | |

En sortie d'extrudeuse, la composition est coupée et mise en forme de morceaux. Le tableau 9 ci-dessous résume les caractéristiques des morceaux calibrés obtenus.

**Tableau 9 : Caractéristiques de la composition alimentaire pois et avoine**

| Format | Dimensions (mm) | Densité g/L | WHC g/g | Humidité (%) | Couleur | Protéine (%) | Glucides (%) | Lipides (%) | Fibres (%) |
|---|---|---|---|---|---|---|---|---|---|
| Morceaux | 20x10 / 10x10(*) | 125 | 1,736 | 8,27 | Jaune clair / beige | 60 | 15 | 5,3 | 13 |

| | | | | | | | | | |
|---|---|---|---|---|---|---|---|---|---|
| (*) le 1^{er} jeu de valeurs correspond aux dimensions (longueur x largeur) mesurées pour les plus grands morceaux, le 2^{ème} jeu correspondant aux dimensions (longueur x largeur) mesurées pour les plus petits morceaux. | | | | | | | | | |

### B4. Composition à base de protéines de lentilles et tournesol

**Tableau 10 : Caractéristiques des matières premières utilisées**

| Matières premières | | |
|---|---|---|
| % de chaque matière première | Débit d'entrée MP (kg/h) | Débit d'entrée Eau (kg/h) |
| -Concentrat de lentille : 24 | 100 | 10,8 |
| -Isolat de pois : 23 | | |
| -Concentrat de tournesol : 51 | | |
| -Fibres de pois : 2 | | |

**Tableau 11 : Caractéristiques de l'extrudeuse**

| Temp. Z1 (°C) | Temp. Z2 (°C) | Temp. Z3 (°C) | Temp. Z4 (°C) | Temp. Z5 (°C) | Temp. Z6 (°C) | Pression (bar) | SME (Wh/kg) |
|---|---|---|---|---|---|---|---|
| 30/30 | 60/60 | 115/108 | 135/133 | 135/127 | 150/143 | 17 | 128 |

| | | | | | | | |
|---|---|---|---|---|---|---|---|
| Temp. : température | | | | | | | |

En sortie d'extrudeuse, la composition est coupée et mise en forme de morceaux. Le tableau 12 ci-dessous résume les caractéristiques des morceaux calibrés obtenus.

**Tableau 12 : Caractéristiques de la composition alimentaire lentilles et tournesol**

| Format | Dimensions (mm) | Densité g/L | WHC g/g | Humidité (%) | Couleur | Protéine (%) | Glucides (%) | Lipides (%) | Fibres (%) |
|---|---|---|---|---|---|---|---|---|---|
| Morceaux | 25x12 / 12x10(*) | 120 | 1,584 | 8,03 | Beige | 58 | 9,3 | 6 | 17 |

| | | | | | | | | | |
|---|---|---|---|---|---|---|---|---|---|
| (*) le 1^{er} jeu de valeurs correspond aux dimensions (longueur x largeur) mesurées pour les plus grands morceaux, le 2^{ème} jeu correspondant aux dimensions (longueur x largeur) mesurées pour les plus petits morceaux. | | | | | | | | | |

### C] Evaluation des qualités organoleptiques des compositions

Les compositions alimentaires décrites ci-dessus ont été testées pour évaluer leurs qualités organoleptiques auprès d'un panel de consommateurs.

Les critères évalués étaient la mâche, la jutosité et la présence d'un goût végétal (ou « goût vert »).

Les compositions témoins correspondaient à
- des protéines de pois texturées « NISCO TPI60C » de la société NISCO
   couleur : jaune clair
   odeur et goût : neutre et agréable, avec une note légère de soja
   forme : morceaux inférieur à 2,5 cm
- des protéines de fèves texturées « Texta fève 65 » de la société SOTEXPRO
   couleur : beige clair
   odeur et goût : fève cuite
   forme : émincée

Les compositions ont été préparées avant dégustation en mélangeant 25g de protéines texturées à 400ml d'eau à 10°C. Les protéines texturées réhydratées ont été égouttées et placées dans différents bols de dégustation. Les bols ont été présentés aux panélistes dans un ordre aléatoire et étaient codés avec des numéros afin que les panélistes ne soient pas influencés par la connaissance du produit.

Un panel de personnes, entrainées à la dégustation et à la notation des protéines texturées a été invité à déguster à l'aveugle et à évaluer cinq critères : la couleur, la fibrosité, la mâche, la jutosité et le gout végétal. Un premier panel de 11 personnes a dégusté les compositions alimentaires selon l'invention, tandis qu'un second panel de 3 personnes a dégusté les compositions témoins. Deux personnes du second panel ont également participé au premier panel.

Plus particulièrement, la mâche, la jutosité et le goût végétal ont été évalués sur une échelle de 1 à 10, selon les instructions ci-dessous.

Mâche : nombre de fois où l'aliment rebondit entre les molaires
0 : mou
10 : beaucoup de mâche

Jutosité (Sec/Juteux) : le juteux reflète la sensation d'humidité en bouche
0 : sec
10 : juteux

Goût végétal :
0 : absent
10 : très présent

Le panel était par ailleurs invité à préciser en commentaire si un autre goût que le goût végétal était perçu.

La figure 1 montre les résultats obtenus pour les compositions B1 et B2 telles que décrites ci-dessus comparées aux protéines texturées de fèves de l'art antérieur.

Il ressort de l'évaluation des panélistes que la mâche et la fibrosité sont améliorées dans les compositions selon l'invention. La sensation d'humidité est réduite, réduisant ainsi la sensation de relargage d'eau au moment de la mastication. Le goût végétal reste léger dans les deux compositions selon l'invention.

La figure 2 montre les résultats obtenus pour la composition B3 telle que décrite ci-dessus comparée aux protéines texturées de pois de l'art antérieur.

Il ressort de l'évaluation des panélistes que la mâche et la fibrosité sont améliorées dans la composition selon l'invention. La jutosité est équivalente à celle des protéines textures de pois de l'état de la technique. Le goût végétal est fortement diminué pour la composition selon l'invention.

## Revendications

1. Composition alimentaire à base de protéines végétales texturées, dans laquelle ladite composition alimentaire comprend entre 50 et 85% en poids de protéines végétales et entre 10 et 25% en poids de fibres végétales, lesdites protéines végétales comprenant d'une part des protéines d'au moins une légumineuse et d'autre part des protéines d'au moins une céréale et/ou d'au moins un oléagineux.

2. Composition alimentaire selon la revendication 1, dans laquelle ladite composition alimentaire comprend au plus 12% en poids d'humidité.

3. Composition alimentaire selon la revendication 1 ou 2, dans laquelle ladite composition alimentaire est obtenue à partir d'un mélange de matières premières comprenant un concentrat protéique de légumineuse et au moins une source protéique additionnelle choisie parmi les protéines de céréales et les protéines d'oléagineux.

4. Composition alimentaire selon la revendication 3, dans laquelle au moins une source protéique additionnelle du mélange de matières premières est un concentrat protéique de céréales ou un concentrat protéique d'oléagineux, et/ou dans laquelle au moins une source protéique additionnelle du mélange de matières premières est un isolat protéique de céréales ou un isolat protéique d'oléagineux, notamment un isolat de blé (gluten).

5. Composition alimentaire selon l'une des revendications 3 ou 4, dans laquelle le mélange de matières premières comprend en outre un isolat protéique de légumineuse et/ou dans laquelle le mélange de matières premières comprend en outre des fibres végétales ajoutées, notamment des fibres de pois.

6. Composition alimentaire selon l'une des revendications 3 à 5, dans laquelle le mélange de matières premières comprend entre 20% et 60% en poids de concentrat protéique de légumineuse et entre 15% et 55% en poids de source protéique additionnelle, et optionnellement entre 20% et 25% en poids d'isolat protéique de légumineuse, et/ou entre 1% et 5% en poids de fibres ajoutées, notamment des fibres de pois, préférentiellement entre 1,5% et 2,5% en poids de fibres ajoutées.

7. Composition alimentaire selon l'une des revendications 1 à 6, dans laquelle les protéines de légumineuses sont choisies parmi les protéines de fèves ou fèveroles, les protéines de pois, les protéines de pois chiche, les protéines de haricot, les protéines de lentille, les protéines de lupin et n'importe quel mélange de celles-ci, et/ou les protéines de céréales sont choisies parmi les protéines de blé, les protéines d'avoine, les protéines de maïs, les protéines de riz, les protéines d'orge, les protéines de seigle, les protéines de sarrazin, les protéines de millet, les protéines de quinoa, les protéines de triticale, et n'importe quel mélange de celles-ci, et/ou les protéines d'oléagineux sont choisies parmi les protéines de tournesol, les protéines de colza, les protéines d'olive, les protéines d'arachide, les protéines de canola, les protéines de chanvre, les protéines de citrouille et n'importe quel mélange de celles-ci.

8. Composition alimentaire selon l'une des revendications 1 à 7, dans laquelle ladite composition alimentaire est sous forme de flocons (« flakes »), morceaux calibrés (« chunks »), granules, billettes ou lamelles.

9. Composition alimentaire selon l'une des revendications 1 à 8, dans laquelle ladite composition alimentaire est sous forme de flocons de longueur comprise entre 5 mm et 15 mm, lesdits flocons ayant une densité apparente comprise entre 120 g/L et 200 g/L, et/ou une capacité de rétention d'eau comprise entre 2,5 et 4 g/g.

10. Composition alimentaire selon l'une des revendications 1 à 8, dans laquelle ladite composition alimentaire est sous forme de morceaux calibrés de longueur comprise entre 10 mm et 40 mm et de largeur comprise entre 5 mm et 30 mm, lesdits morceaux ayant une densité apparente comprise entre 70 g/L et 280 g/L, et/ou une capacité de rétention d'eau comprise entre 1,5 et 3,5 g/g.

11. Composition alimentaire selon l'une des revendications 1 à 8, dans laquelle ladite composition alimentaire est sous forme de granules de longueur comprise entre 5 mm et 30 mm et de diamètre compris entre 1 mm et 5 mm, lesdits granules ayant une densité apparente comprise entre 100 g/L et 160 g/L et/ou une capacité de rétention d'eau comprise entre 1,5 et 3,5 g/g.

12. Mélange de matières premières sèches destiné à être extrudé pour la fabrication d'une composition alimentaire à base de protéines végétales texturées, comprenant entre 50% et 75% en poids de concentrat de protéines végétales, choisis parmi les concentrats protéiques de légumineuses et les concentrats protéiques de céréales ou d'oléagineux, entre 0 et 50% en poids d'isolat de protéines végétales, choisis parmi les isolats protéiques de légumineuse et isolat de blé (gluten), et entre 0 et 5% en poids de fibres végétales ajoutées, ledit mélange étant avantageusement un mélange de poudres.

13. Mélange de matières premières sèches selon la revendication 12, dans lequel le concentrat de protéines végétales est choisi parmi un concentrat de pois, un concentrat de pois chiche, un concentrat de haricot, un concentrat de fève ou féverole, un concentrat de lupin, un concentrat de lentille, un concentrat de blé, un concentrat d'avoine, un concentrat de maïs, un concentrat de riz, un concentrat d'orge, un concentrat de seigle, , un concentrat de sarrazin, un concentré de millet, un concentrat de quinoa, un concentrat de triticale, un concentrat de tournesol, un concentrat de colza, un concentrat d'olive, un concentrat d'arachide, un concentrat de canola, un concentrat de citrouille et n'importe quel mélange de ceux-ci, et/ou dans lequel l'isolat de protéines végétales est choisi parmi un isolat de pois, un isolat de pois chiche, un isolat de haricot, un isolat de fève ou féverole, un isolat de lentille, un isolat de lupin, un isolat de blé (gluten), un isolat d'avoine, un isolat de maïs, un isolat de riz, un isolat d'orge, un isolat de seigle, un isolat de sarrazin, un isolat de millet, un isolat de quinoa, un isolat de triticale, un isolat de tournesol, un isolat de colza, un isolat d'olive, un isolat d'arachide, un isolat de canola, un concentrat de citrouille et n'importe quel mélange de ceux-ci.

14. Procédé de fabrication d'une composition alimentaire à base de protéines végétales texturées selon l'une des revendications 1 à 11, comprenant les étapes selon lesquelles
a) On introduit dans une extrudeuse un mélange de matières premières sèches selon l'une des revendications 12 ou 13 et de l'eau ;
b) On extrude ledit mélange à une température comprise entre 30°C et 170°C ;
c) On sèche la composition en sortie d'extrudeuse.

15. Procédé de fabrication selon la revendication 14, dans lequel le mélange de matières premières sèches et le liquide sont introduits séparément dans l'extrudeuse, le mélange de matières premières sèches étant introduit en amont du liquide.

16. Utilisation d'une composition alimentaire à base de protéines végétales texturées selon l'une des revendications 1 à 11, en remplacement total ou partiel d'une source de protéines animales, telle que de la viande ou du poisson, pour la réalisation d'un produit alimentaire, ladite composition étant préalablement réhydratée.

17. Produit alimentaire comprenant une composition alimentaire à base de protéines végétales texturées selon l'une des revendications 1 à 11.
